# EUROPÄISCHE PATENTSCHRIFT

(11) **EP 2 625 844 B1**
(45) Veröffentlichungstag und Bekanntmachung des Hinweises auf die Patenterteilung: **30.07.2014**
(21) Anmeldenummer: 11764550.7
(22) Anmeldetag: 04.10.2011
(51) Int. Cl.: H04M 1/725, H04L 12/58

(54) **NACHRICHTENÜBERMITTLUNG ÜBER VERSCHIEDENE KANÄLE**
MESSAGE TRANSMISSION VIA VARIOUS CHANNELS
TRANSMISSION DE MESSAGES PAR DIFFÉRENTS CANAUX

(30) Priorität: 05.10.2010 DE 102010047355
(43) Veröffentlichungstag der Anmeldung: 14.08.2013
(73) Patentinhaber: Deutsche Telekom AG, 53113 Bonn (DE)
(72) Erfinder: SCHULZ, Sebastian, 50825 Köln (DE)
(74) Vertreter: Braun-Dullaeus, Karl-Ulrich
(86) Internationale Anmeldenummer: PCT/EP2011/067326
(87) Internationale Veröffentlichungsnummer: WO 2012/045747

(56) Entgegenhaltungen:
- WO-A1-2008/100594
- US-A1- 2006 099 976
- US-A1- 2007 116 195
- US-A1- 2008 208 984
- US-B1- 6 421 707

## Beschreibung

Die Erfindung betrifft ein Verfahren zur Versendung von Daten, insbesondere von Nachrichten, von einem mobilen Endgerät eines Absenders zu einem mobilen Endgerät eines Empfängers, wobei der Absender eine auf seinem Endgerät mittels einer Funktionalität erstellte Nachricht über einen von mehreren auswählbaren Übertragungskanälen, wie SMS, MMS und/oder e-Mail, versendet. Die Erfindung betrifft auch ein Endgerät zur Umsetzung des Verfahrens.

Bekanntermaßen haben die heute verwendeten Mobiltelefone Funktionen, mit denen sich Dateien mit Textnachrichten, Bildern, Videos oder Musikclips an die Endgeräte anderer Nutzer verschicken lassen. Besonders verbreitet ist dabei das Versenden von Kurznachrichten über den SMS-Dienst. Auch das Versenden von Emails mit oder ohne Dateianhängen ist heutzutage gang und gäbe. Zur Erstellung und zum Versenden einer Nachricht ruft der Nutzer die entsprechende auf seinem Mobiltelefon vorgesehene Funktionen auf, erstellt die Nachricht über eine Tastatur, hängt ihr gegebenenfalls eine Datei an und wählt den Button "Senden" an. Alles Weitere, wie das Formatieren der Nachricht entsprechend dem Standard, das Aufbauen der Verbindung und das Einhalten des standardgemäßen Protokolls, macht die Funktion automatisch.

Es ist auch möglich, eine solche Datei zu erstellen und dann an eine ganze Gruppe von ausgewählten Empfängern zu senden. Im Fall einer SMS wird dazu lediglich als Empfänger eine Gruppe aus dem geräteeigenen Adressbuch ausgewählt. Die Funktion arbeitet dann entsprechend die oben genannten Schritte für alle Empfänger der Gruppe ab. Gelegentlich stellt die Funktionalität fest, dass die Übertragung zu einem Mitglied der Gruppe fehl geschlagen ist, weil der gewählte Dienst keine Verbindung zu dessen Adresse aufbauen kann. Dann erhält der Absende eine entsprechende Fehlermeldung.

Nachteilig an den bekannten Funktionen ist, dass sie beim Fehlschlagen der Übermittlung insofern in einer Sackgasse enden, als der Nutzer lediglich eine Information darüber erhält, dass die Übertragung nicht möglich ist. Wenn es besonders schlecht läuft, kann er noch einmal mit der Erstellung der Nachricht und dem Versandt anfangen.

Die US 2007/0116195 A1 offenbart ein Verfahren zum Versenden einer Nachricht von einem Mobiltelefon. Eine entsprechend ausgestaltete Nutzerschnittstelle erlaubt zunächst die Eingabe einer Textnachtricht, welche für den Versand über eine erste Versandmethode bestimmt ist. Anschließend kann eine andere Versandmethode ausgewählt werden. Ein ähnlicher Dienst wird auch in der US 2008/0208984 A1 beschrieben, wobei eine geschriebene Nachricht von einem Email-Format zu einem Chat-Format und umgekehrt konvertiert werden kann.

Die US 8,421,707 B1 offenbart einen Servicedienst, bei dem eine von einem Nutzer bevorzugte Übermittlungsmethode zur Übermittlung von Nachrichten hinterlegt ist. Dieser Dienst nimmt Nachrichten verschiedener Art für den Nutzer entgegen und leitet sie an den Nutzer anhand der bevorzugten Übermittlungsmethode weiter.

Die Aufgabe der Erfindung liegt nunmehr darin, eine auf einem Mobiltelefon einfach umzusetzende Funktionalität zu schaffen, die dem Absender hilft, Fehlschläge bei der Versendung Nachrichten von insbesondere auch an Gruppen von Empfängern soweit wie möglich zu vermeiden. Aufgabe ist es auch, ein Endgerät mit entsprechender Funktionalität zur Verfügung zu stellen.

Gelöst werden diese Aufgaben durch das Verfahren nach Anspruch 1 und durch die Verwendung eines Endgeräts nach Anspruch 8. Die Unteransprüche beschreiben jeweils vorteilhafte Ausführungsformen.

Der Kern der erfindungsgemäßen Funktionalität besteht im Grunde genommen darin, die Schrittfolge bei der Erstellung von Nachrichten umzudrehen. Demnach wird zuerst mittels eines Editors eine Nachricht erstellt und nach Fertigstellung eine Funktion, wie "senden als", angeboten, mit der der Absender dann erst die Art der Übertragung, also den Übertragungskanal aus mehreren zur Verfügung stehenden Übertragungskanälen auswählt. Mit diesem Ansatz lässt sich ein besonderer Komfort bei der Versendung von Nachrichten, insbesondere auch an ganze Gruppen von Nutzern, erzielen. Erfindungsgemäß wird die Nachricht somit zunächst vom Absender mittels eines Editors der Funktionalität erstellt. Erst dann gibt die Funktionalität dem Absender die Möglichkeit, einen von mehreren möglichen Übertragungskanälen für die Versendung der Nachricht auszuwählen.

Dabei ist vorgesehen, dass der Absender eine größere Gruppe von Empfängern und einen zu nutzenden Übertragungskanal auswählt. Ferner gibt die Funktionalität dem Absender einen entsprechenden Hinweis gibt, falls die Übertragung zu einem der Empfänger aus der Gruppe der Empfänger auf dem ausgewählten Übertragungskanal nicht möglich ist. Bei einem (drohenden) Fehlschlagen der Übertragung zu einem Empfänger der Gruppe, wird die Funktionalität entweder einen alternativen Übertragungskanal, über den das Versenden der Nachricht möglich ist, zur manuellen Auswahl vorschlagen oder automatisch gleich einen solchen nutzen.

Mit der erfindungsgemäßen Vorgehensweise wird für den Nutzer ein erhöhter Komfort bei der Versendung von Nachrichten erreicht. Auf diese Weise wird die Funktionalität der Nachrichtensendens für den Kunden attraktiver und wird entsprechend stärker für Kommunikationszwecke genutzt. Damit steigert sich der Umsatz der Serviceprovider.

An dieser Stelle sei ausdrücklich darauf hingewiesen, dass das Merkmal "Nachricht" in der vorliegenden Anmeldung als Synonym für alle Arten von Mediendateien, wie SMS, MMS, Email, Webblog oder Ähnliche, eingesetzt wird, unabhängig davon, ob die "Nachricht" auch Textbestandteile hat oder lediglich Bilder, Videos und/oder Audiodateien aufweist. Unter "Nachricht" wird insbesondere alles subsummiert, was sich von einem Mobiltelefon verschicken lässt.

Um den Bedienkomfort weiter zu erhöhen, fordert die erfindungsgemäße Funktionalität den Absender in einem vorangehenden Schritt vorteilhafterweise zunächst zur Auswahl eines Empfängers aus einer Adressbuchdatei auf. Eine solche Adressbuchdatei kann im Mobiltelefon gespeichert sein. Es ist aber auch möglich, dass das Mobiltelefon Zugriff auf eine zentrale über ein Netz zugängliche Adressbuchdatei hat. Innerhalb der Adressbuchdatei kann der Absender auch Nutzergruppen enthaltend eine Reihe von Namen definiert haben. Wenn die Funktionalität dann Übertragungsmodi vorschlägt, können die Übertragungskanäle schon so vorsortiert sein, dass nur die vorgegeben werden, die zur Übertragung der Nachricht vom Absender zum ausgewählten Empfänger überhaupt zur Verfügung stehen.

Die Auswahl der vorzugebenden Übertragungskanäle kann im Prinzip dadurch geschehen, dass das System die Erreichbarkeit des Empfängers über die einzelnen Kanäle aktuell untersucht. Besonders einfach kann die Auswahl jedoch dadurch erfolgen, dass in der Adressbuchdatei nach darin zu einem Empfänger hinterlegten Übertragungskanälen gesucht wird, die dort als Adressen, wie Email-Adressen oder Telefonnummern, gespeichert sind.

Zudem kann es von großem Vorteil sein, wenn die Funktionalität dem Absender nur solche Übertragungskanäle zur Auswahl vorschlägt, die überhaupt den Versand des für die erstellte Nachricht notwendigen Formates erlauben. So kann es sein, dass der Absender ein Bild in einen Text einbindet, so dass der Versand der Nachricht per reiner SMS ausscheidet, da mit einer solchen im Prinzip nur Textnachrichten von bis zu 160 Zeichen verschickt werden können. Dabei ist es auch möglich, zur Minimierung von Übertragungskosten oder Übertragungsdauer Mischformen von Übertragungsformaten vorzuschlagen. Beispielsweise kann der Text per SMS und das Bild per Email oder MMS verschickt werden.

Diesbezüglich kann es auch von Vorteil sein, dem Absender die möglichen Übertragungskanäle auf dem Bildschirm seines Endgerätes in der Reihenfolge einer vorgegebenen Priorität, beispielsweise in einer Reihenfolge zunehmender Übertragungskosten und/oder zunehmender Übertragungsgeschwindigkeit aufzulisten, wobei es natürlich hilfreich ist, den entsprechenden Parameter ebenfalls anzugeben. Der Absender kann sich dann anhand dieser Information für eine Übertragungsart entscheiden.

Um die Übertragung noch weiter zu vereinfachen, kann die Funktionalität so konzipiert sein, dass sie den zur Übertragung zu nutzende Übertragungskanal automatisch, insbesondere anhand vorbestimmter Kriterien, auswählt. Der Absender drückt dann nur noch auf den Knopf "senden" und die Nachricht gelang dann über einen oder mehrere optimierte Übertragungskanäle an den oder die Empfänger.

Dabei ist die Funktionalität vorteilhafterweise so ausgestaltet, dass sie automatisch eine Konvertierung der Nachricht in das für den alternativen Übertragungskanal notwendige Format durchführt. Dabei braucht sie nicht unbedingt eine schon im Format eines Nachrichtendienstes vorliegende Nachricht zu konvertieren, sondern kann sich der ursprünglich erstellten Nachricht bedienen, um diese nunmehr in ein anderes Format zu bringen.

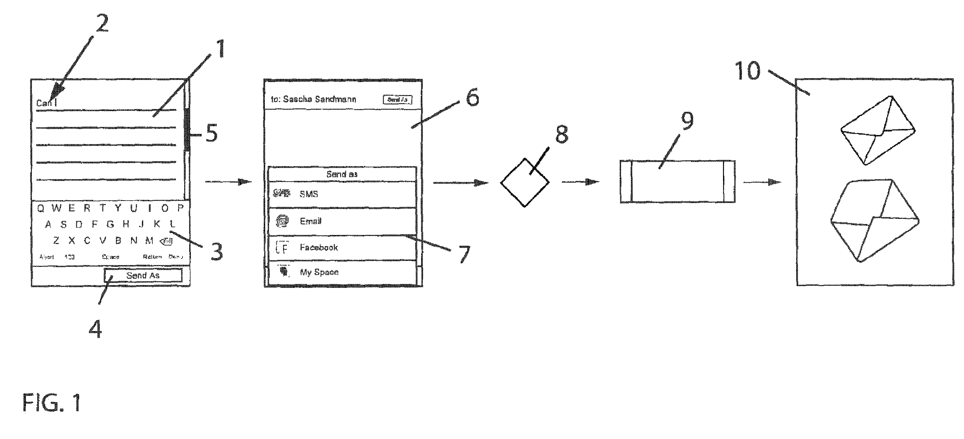

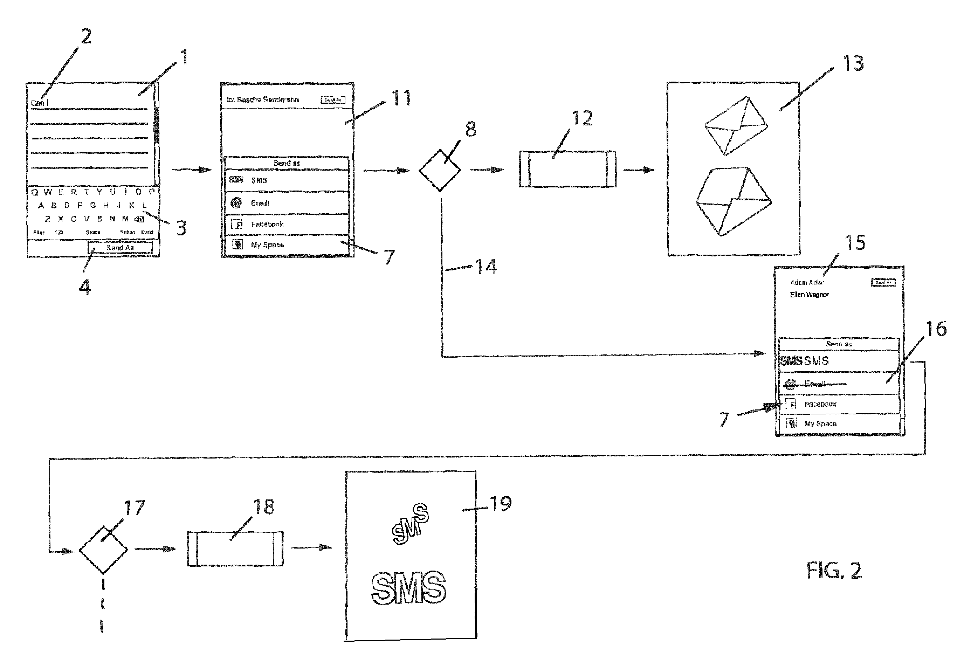

Nachfolgend wird die Erfindung anhand der Figuren 1 und 2 näher erläutert. Es zeigen:
- **Figur 1:**: das Versenden einer Nachricht an eine Kontaktadresse und
- **Figur 2:**: das Versenden einer Nachricht an eine Gruppe von Empfängern.

In Figur 1 ist schematisch der Touchscreen- Bildschirm eines Mobiltelefons gezeigt, auf dem die erfindungsgemäße Funktionalität zum Schreiben und Versenden einer Nachricht installiert und aufgerufen ist. In diesem Stadium wurde schon vorher eine Kontaktadresse, hier die von Herrn Sascha Sandmann, ausgewählt. Auf dem Bildschirm erschein nun der Editor, der es ermöglicht, in dem oberen Textfenster 1 eine Nachricht, die hier mit dem Wort "can" 2 beginnt, in Zeilen zu schreiben. Die Eingabe erfolgt mittels einer Tastatur, die in dem unteren Fenster 3 des Bildschirms eingeblendet ist. Wenn der Bildschirm nicht ausreicht, kann der Nutzer weiter nach unten "scrollen", wobei sich die momentane Position im Text sich an dem "Scrollbalken" 5 ablesen lässt. Der Textnachricht kann der Absender auch Dateien, wie Bilder anhängen, was im vorliegenden Beispiel nicht gezeigt ist. In der untersten Zeile zeigt die Funktionalität den Menüpunkt "send as" 4, den der Nutzer nach dem Fertigstellen der Nachricht anwählt und der zur Auswahl eines Übertragungskanals auffordert.

Wählt der Nutzer "send as", dann wird der obere Bildschirmteil 6 überblendet und von unten schiebt sich das Menüfenster 7 in den Bildschirm auf dem in diesem Falle vier Übertragungskanäle, nämlich per SMS, per Email, zu Facebook und zu My Space, angeboten werden. Nun wählt der Absender beispielsweise "Email" aus, woraufhin eine Systemabfrage 8 gestartet wird, ob alle zum Versenden des Textes als Email notwendigen Informationen, wie insbesondere die Email-Adresse", verfügbar sind. Wenn dem so ist, dann formatiert die Funktionalität in der Funktion 9 die Textnachricht zu einer Email, in der Art, wie es der entsprechende Standard vorschreibt und verschickt die Nachricht als Email 10.

In Figur 2 ist im Prinzip dieselbe Funktionalität gezeigt, wobei dieselben Bezugszeichen die aus Figur 1 bekannten Merkmale bezeichnen. Der Unterschied liegt darin, dass die Nachricht nicht nur an einen Empfänger, sondern an die in Fenster 11 aufgelistete Gruppe von sechs Empfängern gesendet werden soll. Wiederum öffnet sich bei Anwahl von "send as" 4 das Menüfenster 7 mit den vorgeschlagenen Übertragungskanälen, per SMS, per Email, zu Facebook und zu My Space. Wie aus der Hervorhebung ersichtlich, wählt der Absender "Email".

Beim Prüfen der Systemvoraussetzungen in 8 stellt die Funktionalität fest, dass die meisten der in der Gruppe befindlichen Empfänger über eine Email-Adresse und einen entsprechenden Zugang verfügen. Für diese Empfänger wird die Nachricht wiederum in das Format einer Email gepackt 12 und als Email verschickt 13. Die Systemabfrage 12 ergibt aber auch, dass für zwei der Empfänger dem System keine Email-Adressen vorliegen und verzweigt in den Weg 14. Daraufhin öffnet sich erneut das Fenster 7, wobei im oberen Teil des Bildschirms 15 nur noch zwei Empfänger der Gruppe angezeigt sind. Zum Zeichen, dass der Übertragungskanal Email für diese beiden Empfänger nicht funktioniert, ist dieser gestrichen 18.

Der Absender wählt nun SMS, was die Systemabfrage17 dazu veranlasst, die Telefonnummern SMS fähiger Anschlüsse auszusuchen. Im vorliegenden Fall sind für beide Empfänger SMS fähiger Anschlüsse vorhanden, so dass die Nachricht in das Format einer SMS gewandelt 18 und als solche verschickt wird 19. Wäre die Systemabfrage nochmals negativ, hätte die Funktionalität noch einmal einen solchen Weg ab 20 durchlaufen.

## Patentansprüche

1. Verfahren zur Versendung von Nachrichten (10, 13, 19) von einem insbesondere mobilen Endgerät eines Absenders zu einem insbesondere mobilen Endgerät eines Empfängers, wobei der Absender eine auf seinem Endgerät mittels einer Funktionalität (9, 12, 18) erstellte Nachricht über einen von mehreren auswählbaren Übertragungskanälen, wie SMS, MMS und/oder e-Mail, versendet,
wobei der Absender die Nachricht zunächst mittels der Funktionalität erstellt und dass die Funktionalität dem Absender in einem nachfolgenden Schritt die Möglichkeit gibt, den einen von den mehreren möglichen Übertragungskanälen für die Versendung der Nachricht auszuwählen, wobei der Absender eine Gruppe von Empfängern und einen Übertragungskanal auswählt, wobei die Funktionalität dem Absender einen Hinweis gibt, wenn die Übertragung zu einem Empfänger aus der Gruppe der Empfänger auf dem ausgewählten Übertragungskanal nicht möglich ist.
**dadurch gekennzeichnet,**
**dass** die Funktionalität beim Fehlschlagen der Übertragung zu einem Empfänger der Gruppe einen alternativen Übertragungskanal vorschlägt, über den das Versenden der Nachricht möglich ist.

2. Verfahren nach Anspruch 1,
**dadurch gekennzeichnet,**
**dass** die Funktionalität den Absender in einem vorangehenden Schritt (6, 11) zunächst zur Auswahl eines Empfängers aus einer Adressdatei auffordert, wobei nachfolgend aus den Übertragungskanälen nur ein solcher auszuwählen ist, über den die Übertragung von dem Absender zu dem ausgewählten Empfänger möglich ist.

3. Verfahren nach Anspruch 2,
**dadurch gekennzeichnet,**
**dass** in der Adressdatei die zu diesem Empfänger möglichen Übertragungskanäle hinterlegt sind.

4. Verfahren nach einem der vorherigen Ansprüche,
**dadurch gekennzeichnet,**
**dass** dem Absender nur diejenigen Übertragungskanäle zur Auswahl gestellt werden, die den Versand eines für die erstellte Nachricht geeigneten Formates ermöglichen.

5. Verfahren nach einem der vorherigen Ansprüche,
**dadurch gekennzeichnet,**
**dass** die möglichen Übertragungskanäle dem Absender auf dem Bildschirm (6, 11) seines Endgerätes in der Reihenfolge einer vorgegebenen Priorität, insbesondere der Übertragungskosten oder der Übertragungsgeschwindigkeit aufgelistet werden.

6. Verfahren nach einem der vorherigen Ansprüche,
**dadurch gekennzeichnet,**
**dass** der zur Übertragung zu nutzende Übertragungskanal von der Funktionalität automatisch, insbesondere nach vorbestimmten Kriterien, ausgewählt wird.

7. Verfahren nach einem der vorherigen Ansprüche,
**dadurch gekennzeichnet,**
**dass** die Funktionalität automatisch eine Konvertierung der Nachricht in das für den alternativen Übertragungskanal notwendige Format durchführt.

8. Verwendung eines mobilen Endgeräts, insbesondere Mobiltelefon, zur Umsetzung des Verfahrens nach einem der vorhergehenden Ansprüche, aufweisend eine Funktionalität zur Erstellung und zum Versenden von Nachrichten an einen Empfänger über einen auswählbaren Übertragungskanal von mehreren möglichen Übertragungskanälen, wobei die Funktionalität in einem ersten Schritt zum Erstellen der Nachricht und in einem nachfolgenden Schritt zur Auswahl eines Überkragungskanals auffordert.

## Claims

1. Method for transmitting messages (10, 13, 19) from an in particular mobile device of a sender to a in particular mobile device of a recipient, wherein the sender sends a message, which was generated by means of a functionality (9, 12, 28) on his device, via one of several selectable transmission paths, like SMS, MMS and/or Email,
wherein at first the sender generates the message by means of the functionality and that, in a subsequent step, the functionality provides the sender the possibility, to select one of the several transmission paths for sending the message,
wherein the sender selects a group of recipients and a transmission path, wherein the functionality gives the sender an advice, if the transmission to one recipient of the group of recipients is not possible via the selected transmission path,
**characterized in**
**that** in case of failure of the transmssion to one recipient the functionality provides an alternative transmission path, via which the transmission of the message is possible.

2. Method according claim 1,
**characterized in,**
**that** at first the functionality prompts the sender in a previous step (6, 11) to select a recipient from an adress file, wherein subsequently only such transmission path can be selected, via which the transmission from the sender to the selected recipient is possible.

3. Method according claim 2,
**characterized in,**
**that** in the adress file the possible transmission paths to the recipient are stored.

4. Method according to one of the preceding claims,
**characterized in,**
**that** only such a tranmsission path is made availabe to the sender for selecting, which enables the transmission of a suitable format for the generated message.

5. Method according to one of the preceding claims,
**characterized in,**
**that** the possible transmission paths are listet to the sender on a screen (6, 11) of his device in the sequence of a predetermined priority, in particular of the transmission costs or the transmission speed.

6. Method according to one of the preceding claims,
**characterized in,**
**that** the transission path intended to use for the transmission is selected automatically by the functionality, in particular on the basis of predetermined criteria.

7. Method according to one of the preceding claims,
**characterized in,**
**that** the functionality performs automytically a converting of the message in the format, which is essential for the alternative transmission path.

8. Use of a mobile device, in particular mobile phone, for implementing the method according to one of the preceding claims, comprising a functionality for generating and transitting of messages to a recipient via a transmission path selectable from several possible transmission paths, wherein the functionality prompts in a first step to generate the message and in a subsequent step to select a transmission path.

## Revendications

1. Procédé pour envoyer des messages (10, 13, 19) à partir d'un terminal, en particulier mobile, d'un expéditeur vers un terminal, en particulier mobile, d'un destinataire, dans lequel l'expéditeur envoie un message composé sur son terminal à l'aide d'une fonctionnalité (9, 12, 18) par l'intermédiaire d'un parmi plusieurs canaux de transmission pouvant être sélectionnés tels SMS, MMS et/ou messagerie électronique,
dans lequel l'expéditeur composant tout d'abord le message à l'aide de la fonctionnalité et lors d'une étape suivante, la fonctionnalité offrant à l'expéditeur la possibilité de sélectionner l'un parmi les plusieurs canaux de transmission pour l'envoi du message,
dans lequel l'expéditeur sélectionnant un groupe de destinataires et un canal de transmission, la fonctionnalité donnant une indication à l'expéditeur lorsque la transmission à un destinataire du groupe de destinataires n'est pas possible sur le canal de transmission sélectionné, **caractérisé en ce**
**qu'**en cas d'échec de la transmission à un destinataire du groupe, la fonctionnalité propose un canal de transmission en variante par l'intermédiaire duquel l'envoi du message est possible.

2. Procédé selon la revendication 1,
**caractérisé en ce**
**que** lors d'une étape préalable (6, 11), la fonctionnalité invite tout d'abord l'expéditeur à sélectionner un destinataire dans un fichier d'adresses, moyennant quoi il convient ensuite de sélectionner, parmi les canaux de transmission, seulement un canal du genre à permettre la transmission de l'expéditeur vers le destinataire sélectionné.

3. Procédé selon la revendication 2,
**caractérisé en ce**
**que** les canaux de transmission possibles pour ce destinataire sont enregistrés dans le fichier d'adresses.

4. Procédé selon l'une des revendications précédentes,
**caractérisé en ce**
**que** l'on met à disposition de l'expéditeur pour sélection uniquement ceux des canaux de transmission qui permettent l'envoi d'un format adéquat pour le message composé.

5. Procédé selon l'une des revendications précédentes,
**caractérisé en ce**
**que** la liste des canaux de transmission possibles est établie pour l'expéditeur sur l'écran (6, 11) de son terminal selon un ordre en fonction d'une priorité prescrite, en particulier en fonction des coûts de transmission ou de la vitesse de transmission.

6. Procédé selon l'une des revendications précédentes,
**caractérisé en ce**
**que** le canal de transmission à utiliser pour la transmission est automatiquement sélectionné par la fonctionnalité, en particulier selon des critères prédéfinis.

7. Procédé selon l'une des revendications précédentes,
**caractérisé en ce**
**que** la fonctionnalité effectue automatiquement une conversion du message au format nécessaire pour le canal de transmission en variante.

8. Utilisation d'un terminal mobile, en particulier un téléphone portable, pour la mise en oeuvre du procédé selon l'une des revendications précédentes, présentant une fonctionnalité pour la composition et l'envoi de messages à l'attention d'un destinataire via un canal de transmission pouvant être sélectionné parmi plusieurs canaux de transmission possibles,
dans laquelle la fonctionnalité invite à la composition du message lors d'une première étape et invite à la sélection d'un canal de transmission lors d'une étape suivante.
